# EUROPÄISCHE PATENTSCHRIFT

(11) **EP 3 894 993 B1**
(45) Veröffentlichungstag und Bekanntmachung des Hinweises auf die Patenterteilung: **01.04.2026**
(21) Anmeldenummer: 19824241.4
(22) Anmeldetag: 10.12.2019
(51) Int. Cl.: G06F 3/01, G06F 1/16, G06F 3/03, G06F 3/0346

(54) **MOBIL-APPLIKATION ZUM STEUERN EINES COMPUTERSYSTEMS**
MOBILE APPLICATION FOR CONTROLLING A COMPUTER SYSTEM
APPLICATION MOBILE POUR COMMANDER UN SYSTÈME INFORMATIQUE

(30) Priorität: 10.12.2018 DE 102018221320
(43) Veröffentlichungstag der Anmeldung: 20.10.2021
(73) Patentinhaber: Deutsche Bahn AG, 10785 Berlin (DE)
(72) Erfinder: SÜMNICK, Marcus, 17213 Malchow (DE)
(86) Internationale Anmeldenummer: PCT/EP2019/084328
(87) Internationale Veröffentlichungsnummer: WO 2020/120434

(56) Entgegenhaltungen:
- WO-A1-2014/178039

## Beschreibung

Die Erfindung betrifft ein mobiles Computersystem mit im mobilen Computersystem integrierter Sensorik, mindestens einer optischen oder akustischen Ausgabevorrichtung, einem Hardware-Prozessor und physischem Systemspeicher, wobei das mobile Computersystem weiterhin mindestens ein physisches Speichermedium mit einer darauf gespeicherten ersten Softwareapplikation in der Form von computergestützten Anweisungen aufweist, welche, wenn sie ausgeführt werden, das mobile Computersystem dazu veranlassen, eine Abfolge von Schritten durchzuführen, welche folgende Schritte umfasst:
a. Registrieren einer Lageveränderung des mobilen Computersystems mittels der Sensorik,
b. Erkennen eines mit dem mobilen Computersystem ausgeführten Bewegungsmusters,
c. Überprüfen der registrierten Lageveränderung auf Übereinstimmung mit einem vordefinierten Bewegungsmuster oder einer vordefinierten Position und Ausrichtung des mobilen Computersystems.

Die Erfindung betrifft ferner ein diesbezügliches Computerprogrammprodukt mit darauf gespeicherten computerausführbaren Anweisungen.

Computersysteme werden durch in Software-Applikationen eingebettete Funktionalitäten gesteuert. Unter einem Computersystem ist im Sinne dieser Erfindung ein mobiles Computersystem in der Art eines Smartphones oder Tablet-Computers zu verstehen, bei dem innerhalb des Endgeräts nicht nur die für die Konnektivität erforderlichen physischen Komponenten sondern auch die zur Realisierung der wesentlichen Computer-Funktionen erforderlichen Komponenten (wie z.B. Speicher, Prozessor etc.) integriert sind. Unter einer Funktionalität ist im Sinne dieser Erfindung eine definierte, durch das Computersystem ausgeführte Aktion zu verstehen, welche durch einen Nutzer des Computersystems unter Verwendung eines dem Computersystem zugehörigen Eingabegerätes aktivierbar ist. So ist es beispielsweise bekannt, das Computersystem durch Drücken einer definierten Taste eines Eingabegerätes des Computersystems aus einem ersten Ruhezustand (sogenannter "stand-by"-Zustand) in einen zweiten Aktivitätszustand zu überführen. Hierbei erfolgt eine aktive Überwachung von Tasten des Eingabegeräts sowie das Initiieren einer Zustandsänderung des Computersystems vom Ruhezustand in den Aktivitätszustand, sobald eine Zustandsänderung an einer solchen Taste erkannt wird. Ebenso ist das Aktivieren von Funktionalitäten des Computersystems durch das Registrieren einer Lageveränderung des Endgerätes mittels im Endgerät integrierter Sensorik registriert und das Erkennen eines mit dem Endgerät ausgeführtes Bewegungsmusters, z.B mittels eines schnellen Schüttelns des Eingabegeräts durch dessen Nutzer während einer definierten Zeitspanne bekannt.

Dabei ist es für den Betrieb des Computersystems unabdingbar, dass eine eindeutige Zuordnung zwischen einer sensorisch durch das Computersystem erfassbaren Nutzerhandlung und der vom Computersystem auszuführenden Funktionalität besteht. Allerdings steht der großen Vielzahl möglicher Funktionalitäten nur eine vergleichsweise eng begrenzte Anzahl von einfachen, durch den Nutzer intuitiv ausführbaren Aktionen bzw. Handlungen gegenüber. In Folge dessen können längst nicht alle Funktionalitäten durch das sensorische Erkennen eines Bewegungsmusters des Eingabegerätes gestartet werden und es verbleiben insbesondere spezielle Funktionalitäten, die nur für einen begrenzten Kreis von Nutzern eines Computersystems von Relevanz sind. So existieren beispielsweise nach wie vor zahlreiche Software-Applikationen, welche für die Nutzung von sehbehinderten oder blinden Nutzern vorgesehen sind und weiterhin nur durch Antippen eines auf den grafisch orientierten Bedienoberflächen von Smartphones angezeigten Symbolbildes aktivierbar sind. Dies ist für Menschen mit Sehbehinderung äußerst mühsam. Auch das Aktivieren der Applikation mittels Spracherkennung ist umständlich, da es hierfür beim Nutzer bzw. Bediener einer aktiven Kenntnis eines speziellen, die Applikation eindeutig bezeichnenden Schlüsselbegriffes bedarf. Zudem ist eine Spracherkennung gerade in räumlichen Bereichen mit lauten Umgebungsgeräuschen sehr oft fehlerbehaftet und unzuverlässig.

WO2014/178039 A1 offenbart ein gattungsgemäßes mobiles Computersystem bei dem mittels im Eingabegerät integrierter Sensorik eine Lageveränderung des Eingabegerätes registriert wird. Mittels eines solchermaßen erkannten Bewegungsmusters des Eingabegerätes werden auf einem Display des Computersystems dargestellte digitale Objekte im Darstellungsbereich des Displays bewegt. Auf diese Weise kann beispielsweise das Bewegen und Positionieren einer digitalen Figur im Kontext eines Computerspiels oder das Bewegen und Positionieren eines Zeigers oder eines Auswahl-Werkzeuges mittels der erkannten Bewegungsabfolge realisiert werden. In Bezug auf sehbehinderte Personen könnte auf diese Weise beispielsweise eine virtuelle Lupe über den auf dem Display dargestellten digitalen Inhalt geführt werden. Die Aktivierung einer solchen mittels Bewegungsmustern steuerbaren Anwendung erfolgt aber in herkömmlicher und aus dem Stand der Technik bekannter Weise (d.h. gemäß vorgenannter Überwachung von Zustandsänderungen bei Tasten / Schaltflächen / Sensorsignalen des Eingabegerätes).

Der Erfindung liegt daher die Aufgabe zugrunde, ein gattungsgemäßes mobiles Computersystem bereitzustellen, welches die Aktivierung einer zur Ausführung einer Sonder-Funktionalität eingerichteten Software-Applikation vereinfacht.

Dies wird erfindungsgemäß dadurch erreicht, dass, bei positivem Erkennen auf Übereinstimmung des Bewegungsmusters, die Abfolge folgende weitere Schritte umfasst:
d. Auslesen von durch einen Nutzer des mobilen Computersystems parametrierbaren Systemeinstellungswerten des mobilen Computersystems, welche zur Beeinflussung von Parametern mindestens einer optischen oder akustischen Ausgabevorrichtung des mobilen Computersystems eingerichtet sind,
e. Ermitteln eines Bewertungsfaktors für jeden Systemeinstellungswert,
f. Ermitteln eines gewichteten Gesamtwerts aus der Gesamtheit aller Bewertungsfaktoren,
g. Vergleichen des gewichteten Gesamtwerts mit einem vorgebbaren Schwellwert, und
h. Ausführen einer ersten auf dem Speichermedium des mobilen Computersystems gespeicherten und zur Ausführung einer vorgesehenen Standard-Funktionalität eingerichteten Software-Applikation bei Unterschreiten des Schwellwerts und Ausführen einer zweiten auf dem Speichermedium des mobilen Computersystems gespeicherten und zur Ausführung einer Sonder-Funktionalität eingerichteten Software-Applikation bei Überschreiten des Schwellwerts.

Unter einer Sonder-Funktionalität ist im Zusammenhang mit dieser Erfindung eine solche Funktionalität zu verstehen, welche im Gegensatz zu einer Standard-Funktionalität eine lediglich für einen eingeschränkten Kreis von Nutzern des mobilen Computersystems praktische Relevanz aufweist. Solche Sonder-Funktionalitäten im Sinne der Erfindung sind beispielsweise Funktionen, die für körperbehinderte Nutzer von großer Relevanz sind, aber nicht für solche Nutzer ohne Körperbehinderung. Dies kann zum Beispiel ein Programm zur visuellen Mustererkennung mittels einer dem mobilen Computersystem bzw. Gerät zugehörigen Kamera sein.

Die Erfindung ermöglicht es, für eine solche definierte Nutzergruppe einen schnellen und unkomplizierten Zugriff auf eine solche Sonder-Funktionalität zu ermöglichen, während für sonstige Nutzer, die nicht dieser definierten Nutzergruppe angehören, ein weiterhin ungestörter Zugang zu einer Standard-Funktionalität gewährleistet ist. Bei letztgenannter Nutzergruppe wird in erfindungsgemäßer Weise die Aktivierung der Sonder-Funktionalität trotz Ausführung des spezifischen Bewegungsmusters oder Bewegen des Smartphones in die definierte räumliche Lage unterdrückt, sofern die Parametrierung von Systemeinstellungswerten in einer für diese Nutzergruppe typischen Weise einen definierten Schwellwert nicht überschreitet. Hierzu sieht die Erfindung das Auslesen von Nutzer-seitig parametrierbaren Systemeinstellungswerten des Gerätes vor, deren gewichtetes Ergebnis als Schwellwert für das Aktivieren einer zur Ausführung der Sonder-Funktionalität eingerichteten zweiten Software-Applikation vorgesehen ist. Bleibt das gewichtete Ergebnis der ausgelesenen Systemeinstellungswerte unterhalb des Schwellwertes, so erfolgt keine Aktivierung dieser zweiten Software-Applikation und es verbleibt bei der Ausführung einer - quasi standardmäßig vorgesehenen - Standard-Funktionalität. Der Begriff des "Schwellwerts" ist also im Kontext dieser Erfindung gleichbedeutend mit "Grenzwert".

Die Aktivierung der zweiten Sonder-Funktionalität ist dabei zusätzlich mit einer weiteren Voraussetzung in Form eines definierten, vom Nutzer mit dem Gerät vollzogenen Bewegungsmusters oder einer definierten, vom Gerät nach einer solchen Bewegung eingenommenen Lage verknüpft. So können in einfacher Weise in Abhängigkeit von der Parametrierung der optischen oder akustischen Ausgabevorrichtung des Gerätes Sonder-Funktionalitäten gestartet werden, die auf die speziellen Bedürfnisse von hör- oder sehbehinderten Nutzern ausgerichtet sind, sobald der Nutzer mit dem Gerät ein definiertes Bewegungsmuster ausführt oder das Gerät in eine definierte räumliche Lage bringt. Es ist dabei in Bezug auf die erfinderische Grundidee ohne Relevanz, ob (in zeitlicher Reihenfolge) zuerst auf das Vorliegen der definierten räumlichen Lage bzw. des definierten Bewegungsmusters und erst danach auf eine Schwellwert-Überschreitung des Bewertungsfaktoren-Gesamtwertes abgeprüft wird (oder ob dies in umgekehrter zeitlicher Reihenfolge erfolgt). Die Erfindung umfasst beide Ausführungsarten.

Gemäß einer besonders bevorzugten Ausführungsvariante des erfinderischen Grundkonzepts ist vorgesehen, dass die parametrierbaren Systemeinstellungswerte die Skalierung von Schriftgrößen oder Kontrastwerten der optischen Ausgabevorrichtung des Geräts umfassen. Dies stellt eine für die Nutzung durch sehbehinderte Menschen typische Parametrierung dar und ist deshalb besonders gut als Auswahlkriterium für das erfindungsgemäße Verfahren des Aktivierens einer zweiten, an die Bedürfnisse von sehbehinderten Menschen angepassten Sonder-Funktionalität an Stelle einer ersten, nicht an diese Bedürfnisse angepassten Standard-Funktionalität geeignet.

Hierzu alternativ oder ergänzend kann ferner vorgesehen sein, dass die parametrierbaren Systemeinstellungswerte die Aktivierung von Audiodeskriptoren zur Beschreibung optischer Bildinhalte über die akustische Ausgabevorrichtung des Geräts umfassen. Dies stellt eine für die Nutzung durch stark sehbehinderte oder blinde Menschen typische Parametrierung dar und ist deshalb besonders gut als Auswahlkriterium für das erfindungsgemäße Verfahren des Aktivierens einer zweiten, an die Bedürfnisse von sehbehinderten Menschen angepassten Sonder-Funktionalität an Stelle einer ersten, nicht an diese Bedürfnisse angepassten Standard-Funktionalität geeignet.

In besonders vorteilhafter Weise ist die Sonder-Funktionalität dazu eingerichtet, eine zur Mustererkennung mittels einer dem Computersystem zugeordneten Kamera eingerichtete zweite Software-Applikation auszuführen. Ein solches kamerabasiertes Programm zur Mustererkennung dient Nutzern mit Sehbehinderung zum Erkennen von Gegenständen, welche sich in der räumlichen Umgebung des Nutzers befinden, aber von diesem auf Grund der Sehbehinderung nicht mit eigenen Sinnesorganen wahrnehmbar sind.

So kann beispielsweise ein in Form eines Smartphones ausgeführtes Computersystem dazu eingerichtet sein, mittels eines charakteristischen, von einem blinden Nutzer manuell in einfacher Weise durchführbaren Bewegungsmusters eine solche speziell auf die Bedürfnisse blinder Nutzer angepasste Mustererkennung mittels der im Smartphone integrierten Kamera zu starten, ohne dass es hierzu weiterer Bedienhandlungen oder Einstellungen durch den Nutzer am Smartphone bedarf. Ein typisches Bewegungsmuster könnte beispielsweise durch ein schnelles Schütteln des Smartphones während einer definierten Zeitspanne um eine definierte Achse charakterisiert sein oder aber auch durch ein langsames Bewegen des Smartphones in eine definierte räumliche Lage. Für Nutzer ohne Sehbehinderung ist eine solche Mustererkennung in aller Regel ohne praktischen Nutzen..

Die Erfindung umfasst in vorrichtungsorientierter Hinsicht auch ein Computerprogrammprodukt mit darauf gespeicherten computerausführbaren Anweisungen, welche, wenn sie bei einem mobilen Computersystem nach einem der vorgenannten Merkmale ausgeführt werden, das mobile Computersystem dazu veranlassen, eine Abfolge von Schritten durchzuführen, folgende Schritte umfasst:
a. Registrieren einer Lageveränderung des mobilen Computersystems mittels der Sensorik,
b. Erkennen eines mit dem mobilen Computersystem ausgeführten Bewegungsmusters,
c. Überprüfen der registrierten Lageveränderung auf Übereinstimmung mit einem vordefinierten Bewegungsmuster oder einer vordefinierten Position und Ausrichtung des mobilen Computersystems
dadurch gekennzeichnet, dass, bei positivem Erkennen auf Übereinstimmung des Bewegungsmusters, die Abfolge folgende weitere Schritte umfasst:
d. Auslesen von durch einen Nutzer des mobilen Computersystems parametrierbaren Systemeinstellungswerten des mobilen Computersystems, welche zur Beeinflussung von Parametern mindestens einer optischen oder akustischen Ausgabevorrichtung des mobilen Computersystems eingerichtet sind,
e. Ermitteln eines Bewertungsfaktors für jeden Systemeinstellungswert,
f. Ermitteln eines gewichteten Gesamtwerts aus der Gesamtheit aller Bewertungsfaktoren,
g. Vergleichen des gewichteten Gesamtwerts mit einem vorgebbaren Schwellwert, und
h. Ausführen einer ersten auf dem Speichermedium des mobilen Computersystems gespeicherten und zur Ausführung einer vorgesehenen Standard-Funktionalität eingerichteten Software-Applikation bei Unterschreiten des Schwellwerts und Ausführen einer zweiten auf dem Speichermedium des mobilen Computersystems gespeicherten und zur Ausführung einer Sonder-Funktionalität eingerichteten Software-Applikation bei Überschreiten des Schwellwerts.

Die vorliegende Erfindung wird nachfolgend anhand eines Ausführungsbeispiels und dazugehöriger Zeichnung näher erläutert. Es zeigt:

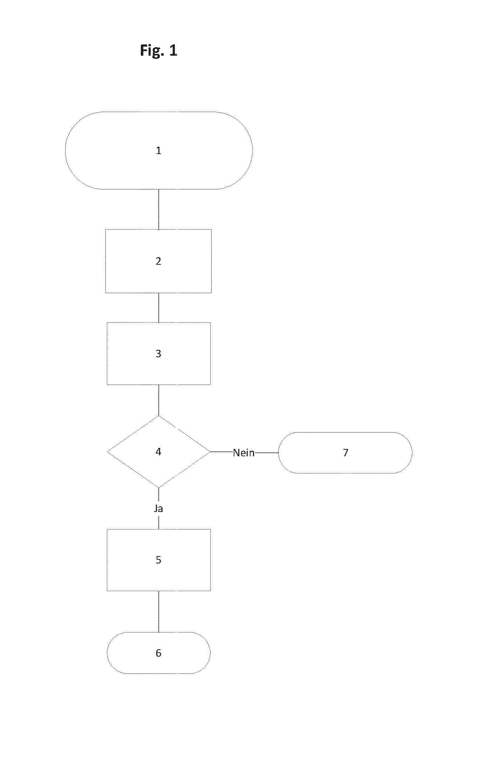

Figur 1 schematisches Ablaufdiagramm des erfindungsgemäßen Verfahrens

Unter Nutzung des erfindungsgemäßen mobilen Computersystems, welches gemäß des hier beschriebenen Ausführungsbeispiels als Smartphone realisiert ist, kann ein blinder Nutzer eine auf dem mobilen Computersystem bzw. Smartphone lauffähige Applikation, welche in an sich bekannter Weise eine maschinelle Bilderkennung durch Auswertung der von einer Smartphone-Kamera erfassten Videobilder sowie eine Sprachausgabe der maschinell erkannten Bildinhalte ausführt, in besonders einfacher Weise starten bzw. aktivieren. Das Smartphone ist zum Erkennen eines von einem Nutzer mit dem Smartphone ausgeführten Bewegungsmusters eingerichtet (Schritt 1). Dies kann beispielsweise dadurch erfolgen, dass der Nutzer das Smartphone in eingeschaltetem Zustand um eine definierte Längsachse des Gerätes während eines definierten Zeitraums schüttelt oder aber - hierzu alternativ - das Smartphone in eine definierte räumliche Lage führt. Mittels der im Smartphone integrierten Sensorik, insbesondere Näherungs-, Lage- und Beschleunigungssensoren, wird diese Lageveränderung bzw. räumliche Lage registriert und auf Übereinstimmung mit einem vordefinierten Bewegungsmuster oder vordefinierten Position und Ausrichtung überprüft. In diesem Kontext sind viele typische Bewegungs- oder Lageveränderungsmuster denkbar, welche mittels der in einem Smartphone eingebauten Sensoren eindeutig erkennbar sind. So könnte beispielsweise im Rahmen dieses erfindungsgemäßen Schritts 1 durch eine erste Auswertung des Näherungssignals die Lage des Smartphones nahe am Körper des Benutzers erkannt werden (d.h. das Ausgangssignal des Näherungssensors bzw. der sensorisch ermittelte Annäherungswert unterschreitet einen vordefinierbaren Schwellwert) und diese Lage durch nachgelagerte Auswertung der Lagesensoren verifiziert bzw. plausibilisiert werden.

Bei positivem Erkennen auf Übereinstimmung des Bewegungsmusters ist das Smartphone zum Auslesen von durch den Nutzer parametrierbaren und in einem internen Gerätespeicher abspeicherbaren Systemeinstellungswerten eingerichtet (Schritt 2), welche die Aktivierung von Audiodeskriptoren zur Beschreibung optischer Bildinhalte von Kamerabildern des Smartphones über dessen akustische Ausgabevorrichtung (d.h. Lautsprecher) kennzeichnen. Ferner ist das Smartphone zur Ermittlung eines positiven Bewertungsfaktores und dessen Abspeicherung in einem Zwischenspeicher eingerichtet, sofern diese Systemeinstellungswerte eine solche Aktivierung kennzeichnen. Ebenso ist das Smartphone zum Auslesen weiterer Systemeinstellungswerte eingerichtet, welche die Skalierung von Schriftgrößen oder Kontrastwerten des Monitors des Smartphones betreffen und ebenfalls mit Bewertungsfaktoren bewertet werden. Je größer die Skalierung bzw. die Kontrastwerte eingestellt sind, desto höher ist der ermittelte Bewertungsfaktor. Ferner ist das erfindungsgemäße Smartphone zur Ermittlung eines gewichteten Gesamtwertes aus den einzelnen Bewertungsfaktoren im Zuge eines dritten Schrittes (3) sowie zu dessen Abgleich mit einem definierten Schwellwert (4) im Zuge eines vierten Schrittes (4) eingerichtet. Es erfolgt also eine Prüfung, ob der in Schritt (3) ermittelte gewichtete Gesamtwert der Bewertungsfaktoren den Schwellwert überschreitet. Das erfindungsgemäße Smartphone ist zum Starten einer zweiten Software-Applikation bei Überschreiten des Schwellwerts eingerichtet, welche zur Ausführung einer zweiten, auf die Bedürfnisse eines blinden Nutzers ausgerichteten Sonder-Funktionalität eingerichtet ist. Auf diese Weise wird die in der ersten Software-Applikation zur Ausführung vorgesehene Standard-Funktionalität, welche für nicht-blinde Nutzer vorgesehen ist, durch die Ausführung der Sonder-Funktionalität ersetzt. In einem abschließenden Schritt (6) wird die zweite Software-Applikation nach Ausführung der Sonder-Funktionalität wieder verlassen. Im Falle eines Unterschreitens des Schwellwerts entfällt der Start der zweiten Software-Applikation; das Smartphone ist zur Ausführung eines alternativen Schritts (7) eingerichtet, gemäß dem die in der ersten Software-Applikation vorgesehene Funktionalität für nicht-blinde Nutzer zur Ausführung kommt. Somit wird der Zugriff auf die spezielle, auf die Bedürfnisse blinder Menschen zugeschnittene Sonder-Funktionalität durch eine einfache manuell durchführbare Bewegung des Smartphones ausgelöst. Ein erfindungsgemäßes Smartphone ist dazu eingerichtet, durch Auslesen von Systemeinstellungswerten sowie deren Gewichten ein Unterscheidungskriterium zu schaffen, auf dessen Basis entweder eine erste, für nicht-blinde Nutzer vorgesehene Standard-Funktionalität oder eine zweite, für blinde Nutzer vorgesehene Sonder-Funktionalität aktiviert wird, ohne dass es hierzu einer speziellen Einstellung oder Mitwirkung des Nutzers bedarf.

Alternativ zu der in diesem Ausführungsbeispiel dargestellten Reihenfolge könnte ein erfindungsgemäßes Smartphone auch zum Abprüfen der Lagesensoren gemäß Schritt (1) erst nach Auslesen der Parametrierungs- bzw. Systemeinstellungswerte gemäß der Schritte (2) bis (4) eingerichtet sein. Dies würde bedeuten, dass ein erfindungsgemäßes Smartphone dazu eingerichtet ist, zunächst den Gesamtwert der Bewertungsfaktoren der einzelnen Systemeinstellungswerte zu ermitteln und gegen einen Schwellwert abzuprüfen und danach den Näherungssensor sowie die Lagesensoren auf Vorliegen einer definierten räumlichen Lage abzuprüfen. Entscheidend für die Erfindung ist, dass das Smartphone zur Ausführung einer Software-Applikation mit einer Nutzer-spezifischen Sonder-Funktionalität erst nach Abprüfen und Bewerten von Lagesensoren sowie Parametrierungs- bzw. Systemeinstellungswerten eingerichtet ist.

### Bezugszeichenliste

- 1: sensorische Erfassung der räumlichen Lage des Smartphones
- 2: Auslesen von Systemparametern
- 3: Ermittlung gewichteter Gesamtwert
- 4: Abgleich Gesamtwert gegen Schwellwert
- 5: Start der zweiten Software-Applikation
- 6: Ausführung der zweiten Sonder-Funktionalität
- 7: Ausführung der ersten Standard-Funktionalität

## Patentansprüche

1. Mobiles Computersystem mit im mobilen Computersystem integrierter Sensorik, mindestens einer optischen oder akustischen Ausgabevorrichtung, einem Hardware-Prozessor und physischem Systemspeicher, wobei das mobile Computersystem weiterhin mindestens ein physisches Speichermedium mit einer darauf gespeicherten ersten Softwareapplikation in der Form von computergestützten Anweisungen aufweist, welche, wenn sie ausgeführt werden, das mobile Computersystem dazu veranlassen, eine Abfolge von Schritten durchzuführen, welche folgende Schritte umfasst:
a. Registrieren einer Lageveränderung des mobilen Computersystems mittels der Sensorik,
b. Erkennen eines mit dem mobilen Computersystem ausgeführten Bewegungsmusters,
c. Überprüfen der registrierten Lageveränderung auf Übereinstimmung mit einem vordefinierten Bewegungsmuster oder einer vordefinierten Position und Ausrichtung des mobilen Computersystems,
**dadurch gekennzeichnet, dass**, bei positivem Erkennen auf Übereinstimmung des Bewegungsmusters, die Abfolge folgende weitere Schritte umfasst:
d. Auslesen von durch einen Nutzer des mobilen Computersystems parametrierbaren Systemeinstellungswerten des mobilen Computersystems, welche zur Beeinflussung von Parametern der mindestens einen optischen oder akustischen Ausgabevorrichtung des mobilen Computersystems eingerichtet sind,
e. Ermitteln eines Bewertungsfaktors für jeden Systemeinstellungswert,
f. Ermitteln eines gewichteten Gesamtwerts aus der Gesamtheit aller Bewertungsfaktoren,
g. Vergleichen des gewichteten Gesamtwerts mit einem vorgebbaren Schwellwert, und
h. Ausführen einer ersten auf dem Speichermedium des mobilen Computersystems gespeicherten und zur Ausführung einer vorgesehenen Standard-Funktionalität eingerichteten Software-Applikation bei Unterschreiten des Schwellwerts und Ausführen einer zweiten auf dem Speichermedium des mobilen Computersystems gespeicherten und zur Ausführung einer Sonder-Funktionalität eingerichteten Software-Applikation bei Überschreiten des Schwellwerts.

2. Mobiles Computersystem nach Patentanspruch 1, wobei die parametrierbaren Systemeinstellungswerte die Skalierung von Schriftgrößen oder Kontrastwerten der optischen Ausgabevorrichtung des Geräts umfassen.

3. Mobiles Computersystem nach Patentanspruch 1 oder 2, wobei die parametrierbaren Systemeinstellungswerte die Aktivierung von Audiodeskriptoren zur Beschreibung optischer Bildinhalte über die akustische Ausgabevorrichtung des Geräts umfassen.

4. Computerprogrammprodukt mit darauf gespeicherten computerausführbaren Anweisungen, welche, wenn sie bei einem mobilen Computersystem nach einem der Patentansprüche 1 bis 3 ausgeführt werden, das mobile Computersystem dazu veranlassen, eine Abfolge von Schritten durchzuführen, welche folgende Schritte umfasst:
a. Registrieren einer Lageveränderung des mobilen Computersystems mittels der Sensorik,
b. Erkennen eines mit dem mobilen Computersystem ausgeführten Bewegungsmusters,
c. Überprüfen der registrierten Lageveränderung auf Übereinstimmung mit einem vordefinierten Bewegungsmuster oder einer vordefinierten Position und Ausrichtung des mobilen Computersystems,
**dadurch gekennzeichnet, dass**, bei positivem Erkennen auf Übereinstimmung des Bewegungsmusters, die Abfolge folgende weitere Schritte umfasst:
d. Auslesen von durch einen Nutzer des mobilen Computersystems parametrierbaren Systemeinstellungswerten des mobilen Computersystems, welche zur Beeinflussung von Parametern mindestens einer optischen oder akustischen Ausgabevorrichtung des mobilen Computersystems eingerichtet sind,
e. Ermitteln eines Bewertungsfaktors für jeden Systemeinstellungswert,
f. Ermitteln eines gewichteten Gesamtwerts aus der Gesamtheit aller Bewertungsfaktoren,
g. Vergleichen des gewichteten Gesamtwerts mit einem vorgebbaren Schwellwert, und
h. Ausführen einer ersten auf dem Speichermedium des mobilen Computersystems gespeicherten und zur Ausführung einer vorgesehenen Standard-Funktionalität eingerichteten Software-Applikation bei Unterschreiten des Schwellwerts und Ausführen einer zweiten auf dem Speichermedium des mobilen Computersystems gespeicherten und zur Ausführung einer Sonder-Funktionalität eingerichteten Software-Applikation bei Überschreiten des Schwellwerts.

## Claims

1. Mobile computer system having a sensor system which is integrated in the mobile computer system, at least one optical or acoustic output device, a hardware processor and physical system memory, wherein the mobile computer system further has at least one physical storage medium with a first software application which is stored thereon in the form of computer-assisted instructions which, when they are carried out, cause the mobile computer system to perform a series of steps which comprises the following steps:
a. registering a position change of the mobile computer system by means of the sensor system,
b. identifying a movement pattern which is carried out with the mobile computer system,
c. verifying the registered position change for compliance with a predefined movement pattern or a predefined position and orientation of the mobile computer system,
**characterized in that**, in the event of positive identification of compliance of the movement pattern, the sequence comprises the following additional steps:
d. reading out system setting values of the mobile computer system, which are parameterisable by a user of the mobile computer system and which are configured to influence parameters of the at least one optical or acoustic output device of the mobile computer system,
e. establishing an evaluation factor for each system setting value,
f. establishing a weighted total value from the entirety of all the evaluation factors,
g. comparing the weighted total value with a predeterminable threshold value, and
h. carrying out a first software application which is stored on the storage medium of the mobile computer system and which is configured to carry out a provided standard functionality when a value has fallen below the threshold value, and carrying out a second software application which is stored on the storage medium of the mobile computer system and which is configured to carry out a special functionality when the threshold value has been exceeded.

2. Mobile computer system according to patent claim 1, wherein the parameterisable system setting values comprise the scaling of character sizes or contrast values of the optical output device of the appliance.

3. Mobile computer system according to patent claim 1 or 2, wherein the parameterisable system setting values comprise the activation of audio descriptors for describing optical image contents via the acoustic output device of the appliance.

4. Computer program product with instructions which can be carried out by a computer, are stored thereon and, when they are carried out on a mobile computer system according to any one of patent claims 1 to 3, cause the mobile computer system to perform a sequence of steps which comprises the following steps:
a. registering a position change of the mobile computer system by means of the sensor system,
b. identifying a movement pattern which is carried out with the mobile computer system
c. verifying the registered position change for compliance with a predefined movement pattern or a predefined position and orientation of the mobile computer system,
**characterized in that**, in the event of positive identification of compliance of the movement pattern, the sequence comprises the following additional steps:
d. reading out system setting values of the mobile computer system, which are parameterisable by a user of the mobile computer system and which are configured to influence parameters of at least one optical or acoustic output device of the mobile computer system,
e. establishing an evaluation factor for each system setting value,
f. establishing a weighted total value from the entirety of all the evaluation factors,
g. comparing the weighted total value with a predeterminable threshold value, and
h. carrying out a first software application which is stored on the storage medium of the mobile computer system and which is configured to carry out a provided standard functionality when a value has fallen below the threshold value, and carrying out a second software application which is stored on the storage medium of the mobile computer system and which is configured to carry out a special functionality when the threshold value has been exceeded.

## Revendications

1. Système informatique mobile avec un système de capteurs intégré dans le système informatique mobile, au moins un dispositif de sortie optique ou acoustique, un processeur matériel et une mémoire système physique, dans lequel le système informatique mobile présente en outre au moins un support de stockage physique avec une première application logicielle enregistrée dessus sous la forme d'instructions assistées par ordinateur qui, lorsqu'elles sont exécutées, amènent le système informatique mobile à exécuter une suite d'étapes qui comprend les étapes suivantes :
a. l'enregistrement d'un changement de position du système informatique mobile au moyen du système de capteurs,
b. l'identification d'un modèle de mouvement exécuté avec le système informatique mobile,
c. la vérification du changement de position enregistré quant à la concordance avec un modèle de mouvement prédéfini ou une position prédéfinie et l'orientation du système informatique mobile,
**caractérisé en ce que** lors de l'identification positive quant à la concordance du modèle de mouvement la suite comprend les autres étapes suivantes :
d. la lecture de valeurs de réglage système du système informatique mobile paramétrables par un utilisateur du système informatique mobile qui sont conçues pour influencer des paramètres de l'au moins un dispositif de sortie optique ou acoustique du système informatique mobile,
e. la détermination d'un facteur d'évaluation pour chaque valeur de réglage système,
f. la détermination d'une valeur entière pondérée à partir de l'entièreté de tous les facteurs d'évaluation,
g. la comparaison de la valeur entière pondérée avec une valeur seuil prédéfinissable et
h. l'exécution d'une première application logicielle enregistrée sur le support de stockage du système informatique mobile et conçue pour exécuter une fonctionnalité standard fournie en cas de non-atteinte de la valeur seuil et l'exécution d'un seconde application logicielle enregistrée sur le support de stockage du système informatique mobile et conçue pour exécuter une fonctionnalité spéciale en cas de dépassement de la valeur seuil.

2. Système informatique mobile selon la revendication 1, dans lequel les valeurs de réglage système paramétrables comprennent la mise à l'échelle de tailles de police ou valeurs de contraste du dispositif de sortie optique de l'appareil.

3. Système informatique mobile selon la revendication 1 ou 2, dans lequel les valeurs de réglage système paramétrables comprennent l'activation d'audiodescripteurs pour la description de contenus d'image optiques via le dispositif de sortie acoustique de l'appareil.

4. Produit de programme informatique avec des instructions enregistrées exécutables par ordinateur qui, lorsqu'elles sont exécutées pour un système informatique mobile selon l'une quelconque des revendications 1 à 3, amènent le système informatique mobile à exécuter une suite d'étapes qui comprend les étapes suivantes :
a. l'enregistrement d'un changement de position du système informatique mobile au moyen du système de capteurs,
b. l'identification d'un modèle de mouvement exécuté avec le système informatique mobile,
c. la vérification du changement de position enregistré quant à la concordance avec un modèle de mouvement prédéfini ou une position prédéfinie et l'orientation du système informatique mobile,
**caractérisé en ce que** lors de l'identification positive quant à la concordance du modèle de mouvement la suite comprend les autres étapes suivantes :
d. la lecture de valeurs de réglage système du système informatique mobile paramétrables par un utilisateur du système informatique mobile qui sont conçues pour influencer des paramètres d'au moins un dispositif de sortie optique ou acoustique du système informatique mobile,
e. la détermination d'un facteur d'évaluation pour chaque valeur de réglage système,
f. la détermination d'une valeur entière pondérée à partir de l'entièreté de tous les facteurs d'évaluation,
g. la comparaison de la valeur entière pondérée avec une valeur seuil prédéfinissable et
h. l'exécution d'une première application logicielle enregistrée sur le support de stockage du système informatique mobile et conçue pour exécuter une fonctionnalité standard fournie en cas de non-atteinte de la valeur seuil et l'exécution d'un seconde application logicielle enregistrée sur le support de stockage du système informatique mobile et conçue pour exécuter une fonctionnalité spéciale en cas de dépassement de la valeur seuil.
